# EUROPEAN PATENT SPECIFICATION

(11) **EP 3 945 245 B1**
(45) Date of publication and mention of the grant of the patent: **07.02.2024**
(21) Application number: 20187969.9
(22) Date of filing: 27.07.2020
(51) Int. Cl.: F23R 3/00, F01D 5/12

(54) **HOT GAS PATH COMPONENT FOR A GAS TURBINE WITH BUILT-IN HEAT EXCHANGER**
HEISSGASPFADKOMPONENTE FÜR EINE GASTURBINE MIT EINGEBAUTEM WÄRMETAUSCHER
COMPOSANT DE TRAJET DE GAZ CHAUD POUR UNE TURBINE À GAZ À ÉCHANGEUR DE CHALEUR INTÉGRÉ

(43) Date of publication of application: 02.02.2022
(73) Proprietor: Ansaldo Energia Switzerland AG, 5400 Baden (CH)
(72) Inventor: MAURER, Michael Thomas, 79713 Bad Saeckingen (DE); STEINER, Harald, 5405 Baden (CH)
(74) Representative: Studio Torta S.p.A.

(56) References cited:
- US-A- 3 832 847
- US-A- 5 647 202
- US-A- 5 899 060
- US-A1- 2017 227 221
- US-A1- 2019 301 375

## Description

### TECHNICAL FIELD

The present invention relates to a hot gas path component for a gas turbine engine with built-in heat exchanger.

### BACKGROUND

As is known, a combustor of gas turbine engines comprises a hot gas path, inside which fuel is mixed with air and burnt. Hot gas thus produced is then fed to a turbine or expansion section of the gas turbine engine for conversion of thermal and kinetic energy into mechanical energy.

The hot gas path is essentially delimited by a tubular wall with an inner hot surface and an outer cold surface and may be formed by several components. The hot gas path components may comprise one or more combustion sections, defining corresponding combustion volumes (e.g. in case of sequential combustors), and a transition duct. The transition duct is configured to guide hot gas into the turbine inlet and is thus exposed to high temperatures. As other components of gas turbine engines, also components delimiting the hot gas path, and especially the transition duct, require cooling to avoid damages caused by overheating and to increase lifetime. For the purpose of cooling the hot gas path components, a fraction of the total airflow is usually taken from the compressor and fed to a cooling system through a plenum around the combustor. Several kinds of known cooling systems may be used, such as impingement cooling systems, convective cooling systems or near wall cooling systems. All known systems, however, suffer from limitations that do not allow further raising the firing temperature within the hot gas paths, as would instead be desirable, or otherwise affect operation of the gas turbine unit.

One common issue is the large difference of temperature between inner surface, which is exposed to hot gas flow, and the outer surface, which is in contact with cooling fluid or in any case relatively fresh air. When the gas turbine engine is started or undergoes large load change, the inner surface is subject to much greater thermal expansion than the outer surface and such a mismatch may cause intense static mechanical stress and lead to creep, thus resulting in reduced lifetime of components.

US 2017/0227221 A1 discloses a component for a gas turbine engine comprising a tubular wall structure, having an inner shell, an outer shell and a plurality of ribs, the ribs connecting the inner shell and the outer shell to each other. A plurality of cooling channels extend through the tubular wall structure between the inner shell and the outer shell and are defined by respective pairs of adjacent ribs. A heat exchanger circulates a heat exchange fluid through the inner shell, directs the heat exchange fluid to the outer shell from the inner shell through the ribs and circulates the heat exchange fluid through the outer shell. The heat exchanger comprises inner heat exchange passages extending in the inner shell and outer heat exchange passages extending in the outer shell. Connecting passages extend through respective ribs and fluidly couple respective inner heat exchange passages and respective outer heat exchange passages

Other examples of known gas turbine components are disclosed in US 5,899,060 A and in US 3,832,847 A.

### SUMMARY OF THE INVENTION

It is an aim of the present invention to provide a hot gas path component for a gas turbine engine which allows to overcome or at least attenuate the limitations described.

According to the present invention, there is provided a hot gas path component for a gas turbine engine comprising:
a tubular wall structure, having an inner shell, an outer shell and a plurality of ribs, the ribs connecting the inner shell and the outer shell to each other;
a plurality of cooling channels extending through the tubular wall structure between the inner shell and the outer shell and defined by respective pairs of adjacent ribs;
a heat exchanger configured to circulate a heat exchange fluid through the inner shell, to direct the exchange fluid to the outer shell from the inner shell through at least some of the ribs and to circulate heat exchange fluid through the outer shell;
wherein the heat exchanger comprises inner heat exchange passages extending in the inner shell, outer heat exchange passages extending in the outer shell and connecting passages extending through respective ribs and configured to fluidly couple respective inner heat exchange passages and respective outer heat exchange passages;
characterized in that the heat exchanger comprises inlet passages having respective inlet openings in an outer surface of the outer shell and reach respective inner heat exchange passages through respective ribs and in that the outer heat exchange passages are fluidly coupled to respective cooling channels through outlet openings.

The hot gas component may be any component that delimits a flow path of hot gas in a gas turbine engine, such as a liner of a combustion chamber of a single stage, first stage or second stage combustor or a transition piece joining a combustion chamber to an inlet of a high pressure or low pressure turbine in a gas turbine engine. The inner side and the outer side of the tubular wall structure are therefore subject to huge temperature differences in operation. The heat exchanger allows to equalize temperature distribution between the inner shell, which is exposed to hot gas, and the outer shell, which is in contact with relatively fresh air from the compressor. The heat exchange fluid is in fact first circulated in the inner shell and picks up heat from hot gas flowing in the hot gas path, thus reducing the average temperature of the inner shell. Then, the heat exchange fluid is directed to the outer shell and circulated therein to disperse collected heat and raise average temperature. The difference in average temperatures of the inner shell and the outer shell may be significantly reduced and mechanical stress due to mismatch in thermal expansion is consequently relaxed. Reduced mechanical stress is obviously beneficial to lifetime of components.

The heat exchanger in integrated in the tubular wall structure and does not require additional components. At the same time, the space occupied is not appreciably increased and no undesired aerodynamic effects, such as turbulence or pressure drop in the cooling channels, are involved. Also cost and complexity of the manufacturing process are not significantly affected.

Although rectilinear passages joined by bends actually yield effective heat transfer, the shape of the inner heat exchange passages, of the outer heat exchange passages and of the connecting passages is not bound to a specific pattern and may be selected in accordance with design preferences. For example, serpentine-shaped passages may be envisaged and integrated in any one of the inner shell, the outer shell and the ribs.

The heat exchange fluid, which may be relatively fresh air from a plenum fed by the compressor of the gas turbine engine, is directly sent to the inner shell to maximize heat pick-up from the hot gas flowing in the hot gas path.

The heat exchange fluid is effectively discharged in the cooling channel as available pressure drop ensures sufficient flow and thermal exchange. The airflow through the cooling channels is not disturbed and design is straightforward, as the outer heat exchange passages run near the cooling channels.

According to an aspect of the invention, the heat exchanger comprises intermediate passages formed in respective ribs and connected to respective inner heat exchange passages through respective connecting passages and further fluidly coupled to respective cooling channels through respective outlet openings.

The intermediate passages provide increased flexibility in design of the heat exchanger and allow to redistribute heat also in the ribs to reduce local mechanical stress in accordance with preferences or specific needs. The intermediate passages may be rectilinear or in any other suitable configuration, e.g. serpentine-shaped.

According to an aspect of the invention, the outer heat exchange passages are formed in the outer shell at respective ribs or between respective pairs of adjacent ribs.

Likewise, the inner heat exchange passages are formed in the inner shell at respective ribs or between respective pairs of adjacent ribs.

According to an aspect of the invention, the heat exchanger comprises as many inner heat exchange passages and outer heat exchange passages as the ribs.

The position, the shape and the local density of the heat exchange passages may be flexibly selected in accordance with design preferences to optimize heat distribution and to keep into account possible specific needs. For example, at certain locations the density of the heat exchange passages may be greater to mitigate adverse effects of hot spots. The provision of inner heat exchange passages and outer heat exchange passage at every rib maximizes heat distribution.

According to an aspect of the invention, the inner heat exchange passages and the outer heat exchange passages are symmetrically distributed along a perimeter of the tubular wall structure.

As hot gas components often exhibit symmetrical shape with respect to a median plane or a longitudinal axis, symmetric distribution of the heat exchange passages is effective in equalizing temperature and avoid concentration of mechanical stress due to thermal mismatch.

According to an aspect of the invention, heat exchange circuits are formed each by a respective one of the inner heat exchange passages and a respective one of the outer heat exchange passages mutually coupled by a respective one of the connecting passages and a plurality of heat exchange circuits are arranged in succession at respective subsequent longitudinal locations of the tubular wall structure.

Thus, separate heat exchange circuits may be provided at respective different sections of the tubular wall structure. Fresh heat exchange fluid may be supplied at different longitudinal locations and the length of the heat exchange circuits and of the sections of the tubular wall structure may be selected to achieve satisfactory heat distribution and reduction of mechanical stress throughout the hot gas path component.

According to an aspect of the invention, each inner heat exchange passage is fluidly coupled to a plurality of outer heat exchange passages and/or each outer heat exchange passage is fluidly coupled to a plurality of inner heat exchange passages.

According to an aspect of the invention, the inner heat exchange passages and the outer heat exchange passages extend in a longitudinal direction of the tubular wall structure.

According to an aspect of the invention, the ribs extend longitudinally with respect to the tubular wall structure and transversely to the inner shell and to the outer shell.

According to an aspect of the invention, a gas turbine engine comprises a hot gas path component.

According to an aspect of the invention, the gas turbine engine comprises a compressor and an air plenum fed by the compressor, wherein the outer shell of the hot gas component is fluidly coupled to the plenum and the heat exchanger is supplied with air from the plenum.

In gas turbine engines, the compressor provides multiple sources of cooling air which may be taken at different compressor stages. Thus, the heat exchanger can be fed through the plenum with air at appropriate conditions of temperature and pressure, which is directly sent to and circulated in the inner shell to maximize heat transfer and temperature equalization.

### BRIEF DESCRIPTION OF THE DRAWINGS

The present invention will now be described with reference to the accompanying drawings, which show some non-limiting embodiment thereof, in which:
- Figure 1 is a side elevation view, cut along an axial, longitudinal plane, of a gas turbine engine;
- Figure 2 is a perspective view of a hot gas path component of the a gas turbine engine of figure 1, made in accordance with an embodiment of the present invention;
- Figure 3 is a side cross-sectional view of the hot gas path component of figure 2, taken along plane III-III of figure 2;
- Figure 4 is a front cross-sectional view of the hot gas path component of figure 2, taken along plane IV-IV3 of figure 2;
- Figure 5 is a side cross-sectional view of a hot gas path component of gas turbine engine, in accordance with a different embodiment of the present invention;
- Figure 6 is a side cross-sectional view of a hot gas path component of gas turbine engine, in accordance with another embodiment of the present invention;
- Figure 7 is a front cross-sectional view of a hot gas path component of gas turbine engine, in accordance with another embodiment of the present invention;
- Figure 8 is a side cross-sectional view of the hot gas path component of figure 7, taken along plane VIII-VIII of figure 7;
- Figure 9 is a side cross-sectional view of a hot gas path component of gas turbine engine, in accordance with another embodiment of the present invention;
- Figure 10 is a front cross-sectional view of a hot gas path component of gas turbine engine, in accordance with another embodiment of the present invention;
- Figure 11 is a front cross-sectional view of a hot gas path component of gas turbine engine, in accordance with another embodiment of the present invention; and
- Figure 12 is a front cross-sectional view of a hot gas path component of gas turbine engine, in accordance with another embodiment of the present invention.

### DETAILED DESCRIPTION OF EXEMPLARY EMBODIMENTS

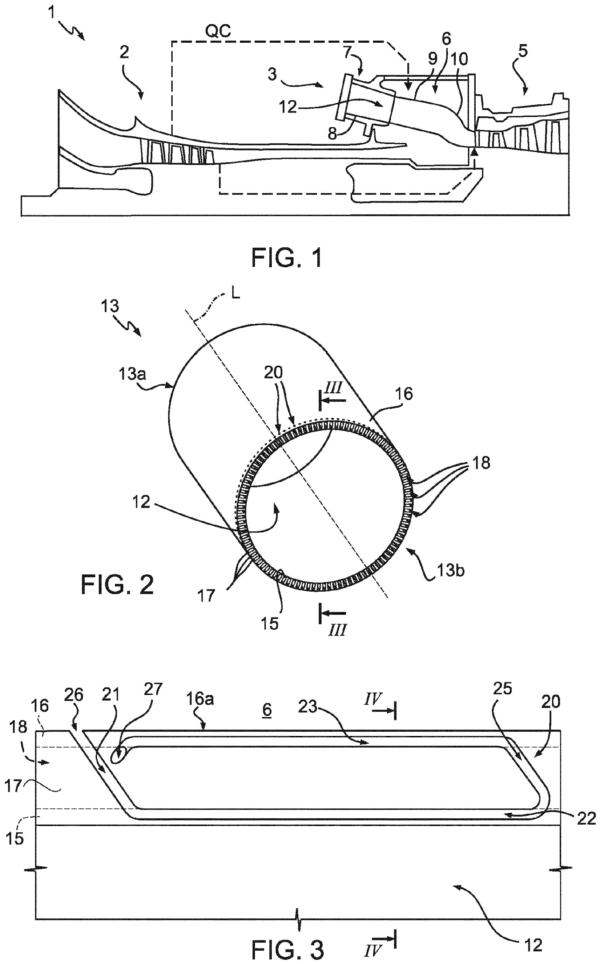

Figure 1 shows a simplified view of a gas turbine engine, designated as whole with numeral 1. The gas turbine engine 1 comprises a compressor 2, a combustor assembly 3 and a turbine 5. The compressor section 2 and the turbine 5 extend along a main axis A. The combustor assembly 3 may be a sequential combustor assembly, as in the example of figure 1, or a single-stage combustor assembly. In one embodiment, the combustor assembly 3 comprises a plurality of sequential can combustors 7, circumferentially arranged about the main axis A.

The compressor 2 of the gas turbine engine 1 provides a compressed airflow, which is added with fuel and burned in the can combustors 7. Part of the airflow delivered by the compressor 2 is supplied to the combustor assembly 3 and to the turbine section 5 for the purpose of cooling. Specifically a cooling airflow QC is taken from an intermediate stage of the compressor 2 and is supplied to an air plenum 6 around the can combustors 7.

In one embodiment, each of the can combustors 7 comprises a first-stage combustor 8 and a second-stage combustor 9 and a transition duct 10, sequentially arranged and defining hot gas path components of a hot gas path 12.

Hereinafter, reference will be made to the second-stage combustor 9, being it understood that what will be described also applies to all other hot gas path components. As shown in figures 2-4, a hot gas path component in accordance with the invention, specifically the second-stage combustor 9 in one embodiment, is made in a single piece and comprises a tubular wall structure 13 that extends along a longitudinal axis L from an upstream end 13a to a downstream end 13b. The tubular wall structure 13 in turn comprises an inner shell 15, an outer shell 16 and a plurality of ribs 17, that connect the inner shell 15 and the outer shell 16 to each other. The inner shell 15 delimits the hot gas path 12, whereas the outer shell communicates with the plenum 6. The ribs 17 extend in a longitudinal direction the tubular wall structure 13 and transversely to the inner shell 15 and to the outer shell 16, e.g. perpendicularly. Cooling channels 18 extend through the tubular wall structure 13 between the inner shell 15 and the outer shell 16 and are defined and separated from one another by respective pairs of adjacent ribs 17.

A heat exchanger 20 is integrated in the tubular wall structure 13 and is configured to circulate a heat exchange fluid through the inner shell 15, to direct the exchange fluid to the outer shell 16 from the inner shell 15 through the ribs 17 and to circulate the heat exchange fluid through the outer shell 16. The heat exchanger 20 comprises inlet passages 21, inner heat exchange passages 22, outer heat exchange passages 23 and connecting passages 25.

The inlet passages 21 have respective inlet openings 26 in an outer surface 16a of the outer shell 16. Therefore, the inlet passages 21 are fluidly coupled to the plenum 6 and an airflow is supplied to the heat exchanger 20 as a heat exchange fluid. The inlet passages 21 extend through respective ribs 17 and reach respective inner heat exchange passages 22 in the inner shell 15.

In one embodiment, the inner heat exchange passages 22 are formed in the inner shell 15 at junctions of the inner shell 15 with the ribs 17. Likewise, the outer heat exchange passages 23 are formed in the outer shell 16 at junctions of the outer shell 16 with the ribs 17. Inner heat exchange passages 22 and outer heat exchange passages 23 are provided at each rib 17 and extend in the inner shell 15 and in the outer shell 16, respectively, in a longitudinal direction of the tubular wall structure 20. Thus, the heat exchanger 20 comprises as many inner heat exchange passages 22 and outer heat exchange passages 23 as the ribs 17 and the inner heat exchange passages 22 and the outer heat exchange passages 23 are symmetrically distributed along a perimeter of the tubular wall structure 13. In the example of figures 2-4 the inner heat exchange passages 22 and the outer heat exchange passages 23 are rectilinear.

Each inner heat exchange passages 22 is coupled to a respective one of the outer heat exchange passages 23 by a connecting passage 25, that extends through a respective rib 17 and may run parallel to the respective inlet passage 21.

The outer heat exchange passages 23 are fluidly coupled to respective cooling channels 18 through outlet openings 27 formed on sides of the respective ribs 17. The pressure drop in the cooling channels 18 with respect to the plenum 6 is sufficient to ensure circulation of the heat exchange fluid through the heat exchanger 20 and discharge in the cooling channels 18. A discharge angle of the outer heat exchange passages 23 may be selected to prevent turbulence in the cooling fluid flowing through the cooling channels 18.

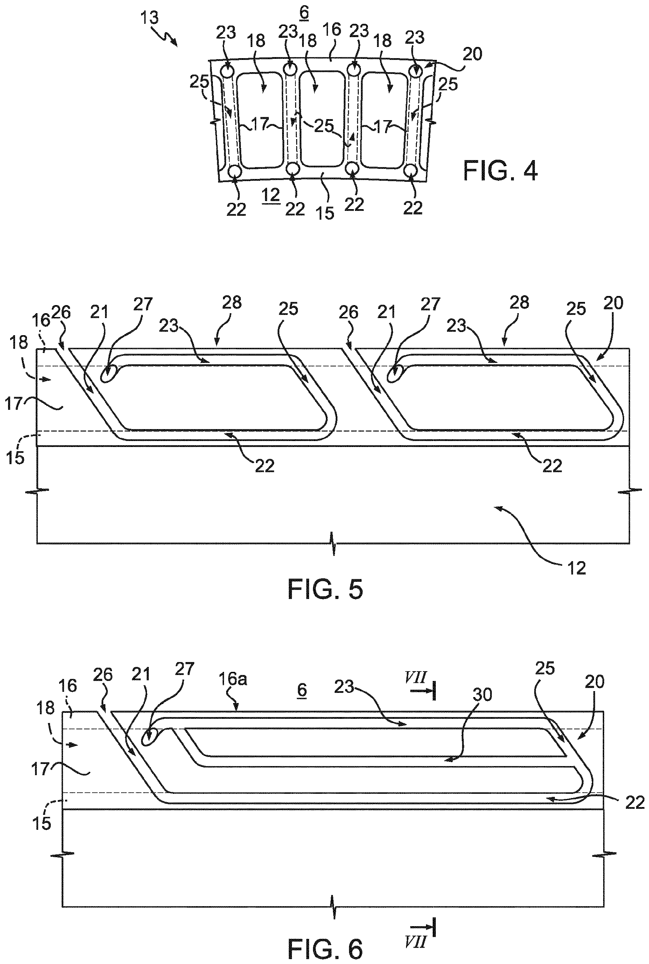

As illustrated in figure 5, the heat exchanger 20 may comprise a plurality of heat exchange circuits 28 in the ribs 17 with independent inlet openings 26 at respective longitudinal locations of the tubular wall 13. Each heat exchange circuit 28 includes at least one inlet passage 21, one inner heat exchange passage 22 and one outer heat exchange passage 23 coupled to each other.

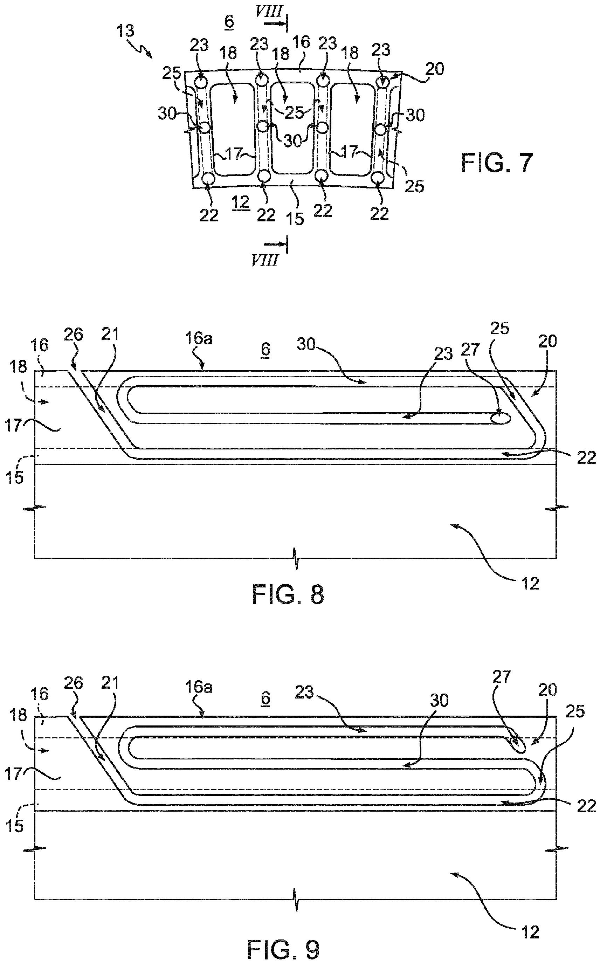

In one embodiment, shown in figures 6 and 7, the heat exchanger 20 comprises intermediate passages 30, which are formed in respective ribs 17 between the inner shell 1 and the outer shell 16 and run parallel to respective inner heat exchange passages 22 and outer heat exchange passages 23. The intermediate passages 30 are connected to respective inner heat exchange passages 22 through respective connecting passages 25. Moreover, the intermediate passages 30 are fluidly coupled in parallel to the respective outer heat exchange passages 23 between the respective connecting passages 25 and outlet openings 27.

Alternatively, the intermediate passages 30 may also be fluidly connected in series between the respective inner heat exchange passages 22 and outer heat exchange passages 23, as in the embodiment of figure 8, or downstream of the respective outer heat exchange passages 23, as in the embodiment of figure 9.

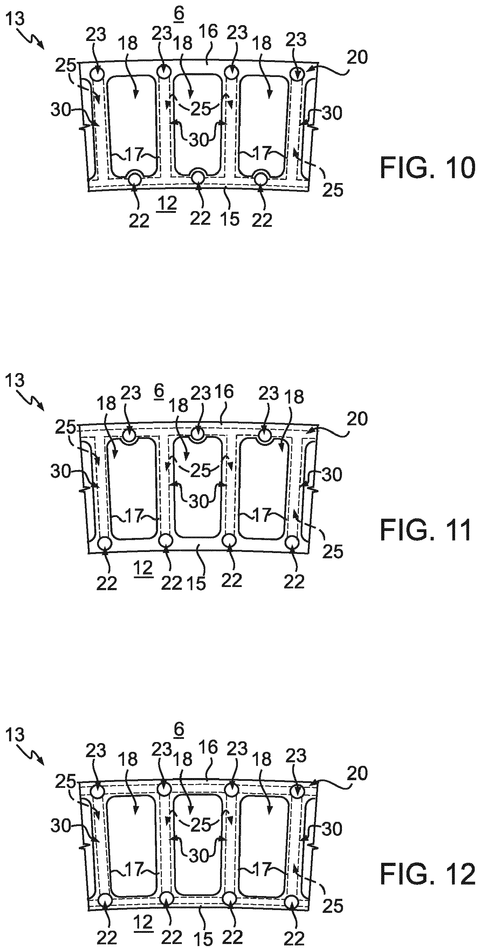

In one embodiment, figure 10, the inner heat exchange passages 22 are formed in the inner shell 15 between respective pairs of adjacent ribs 17 and adjacent inner heat exchange passages 22 are fluidly coupled to each other by further connecting passages 31 that extend in the inner shell 15 in a circumferential direction. The connecting passages 25 couple the outer heat exchange passages 23 to respective connecting passages 31. Accordingly, each outer heat exchange passage 23 is fluidly coupled to a plurality of inner heat exchange passages 22.

In another embodiment, figure 11, the outer heat exchange passages 23 are formed in the outer shell 16 between respective pairs of adjacent ribs 17 and adjacent outer heat exchange passages 23 are fluidly coupled to each other by further connecting passages 32 that extend in the outer shell 16 in a circumferential direction. The connecting passages 25 couple the inner heat exchange passages 22 to respective connecting passages 32. Accordingly, each inner heat exchange passage 22 is fluidly coupled to a plurality of outer heat exchange passages 22.

In one embodiment, figure 12, all the inner heat exchange passages 22 and outer heat exchange passages 23 are fluidly coupled to one another.

Finally, it is evident that the described transition duct may be subject to modifications and variations, without departing from the scope of the present invention, as defined in the appended claims.

In particular, any other component of the hot gas path may have the structure described above and any suitable combination of the may be obtained in accordance with design preferences.

The inner heat exchange passages and the outer heat exchange passages need not be provided at each rib or at each channel. Depending on specific requirements, fewer inner and/or outer heat exchange passages may be sufficient to achieve satisfactory equalization of temperatures and reduction of stress. The inner, outer and intermediate heat exchange passages have been presented as rectilinear, but may be provided in any suitable configuration, such as in the shape of serpentines. Also connections between inner heat exchange passages and outer heat exchange passages may be provided in accordance with specific requirements.

## Claims

1. A hot gas path component for a gas turbine engine comprising:
a tubular wall structure (13), having an inner shell (15), delimiting a hot gas path (12), an outer shell (16) and a plurality of ribs (17), the ribs (17) connecting the inner shell (15) and the outer shell (16) to each other;
a plurality of cooling channels (18) extending through the tubular wall structure (13) between the inner shell (15) and the outer shell (16) and defined by respective pairs of adjacent ribs (17);
a heat exchanger (20) configured to circulate a heat exchange fluid (QC) through the inner shell (15), to direct the heat exchange fluid (QC) to the outer shell (16) from the inner shell (15) through at least some of the ribs (17) and to circulate the heat exchange fluid (QC) through the outer shell (16);
wherein the heat exchanger (20) comprises inner heat exchange passages (22) extending in the inner shell (15), outer heat exchange passages (23) extending in the outer shell (16) and connecting passages extending through respective ribs (17) and configured to fluidly couple respective inner heat exchange passages (22) and respective outer heat exchange passages (23);
**characterized in that** the heat exchanger (20) comprises inlet passages (25) having respective inlet openings (26) in an outer surface (16a) of the outer shell (16) and reach respective inner heat exchange passages (22) through respective ribs (17), and **in that** the outer heat exchange passages (23) are fluidly coupled to respective cooling channels (18) through outlet openings.

2. The hot gas path component according to claim 1, wherein the heat exchanger (20) comprises intermediate passages (30) formed in respective ribs (17) and connected to respective inner heat exchange passages (22) through respective connecting passages and further fluidly coupled to respective cooling channels (18) through respective outlet openings.

3. The hot gas path component according to any one of the preceding claims, wherein the outer heat exchange passages (23) are formed in the outer shell (16) at respective ribs (17) or between respective pairs of adjacent ribs (17).

4. The hot gas path component according to any one of the preceding claims, wherein the inner heat exchange passages (22) are formed in the inner shell (15) at respective ribs (17) or between respective pairs of adjacent ribs (17).

5. The hot gas path component according to any one of the preceding claims, wherein the heat exchanger (20) comprises as many inner heat exchange passages (22) and outer heat exchange passages (23) as the ribs (17).

6. The hot gas path component according to any one of the preceding claims, wherein the inner heat exchange passages (22) and the outer heat exchange passages (23) are symmetrically distributed along a perimeter of the tubular wall structure (13).

7. The hot gas path component according to any one of the preceding claims, wherein heat exchange circuits (28) are formed each by a respective one of the inner heat exchange passages (22) and a respective one of the outer heat exchange passages (23) mutually coupled by a respective one of the connecting passages (25) and a plurality of heat exchange circuits (28) are arranged in succession at respective subsequent longitudinal locations of the tubular wall structure (13).

8. The hot gas path component according to any one of the preceding claims, wherein each inner heat exchange passage (22) is fluidly coupled to a plurality of outer heat exchange passages (23) and/or each outer heat exchange passage (23) is fluidly coupled to a plurality of inner heat exchange passages (22).

9. The hot gas path component according to any one of the preceding claims, wherein the inner heat exchange passages (22) and the outer heat exchange passages (23) extend in a longitudinal direction of the tubular wall structure (13).

10. The hot gas path component according to any one of the preceding claims, wherein the ribs (17) extend longitudinally with respect to the tubular wall structure (13) and transversely to the inner shell (15) and to the outer shell (16).

11. A gas turbine engine comprising a hot gas path component (10) according to any one of the preceding claims.

12. The gas turbine engine according to claim 11, comprising a compressor and an air plenum fed by the compressor, wherein the outer shell (16) of the hot gas component is fluidly coupled to the plenum and the heat exchanger (20) is supplied with air from the plenum.

## Patentansprüche

1. Heißgaspfadkomponente für eine Gasturbinenmaschine, umfassend:
eine rohrförmige Wandstruktur (13), die einen inneren Mantel (15), der einen Heißgaspfad (12) begrenzt, einen äußeren Mantel (16) und mehrere Rippen (17) aufweist, wobei die Rippen (17) den inneren Mantel (15) und den äußeren Mantel (16) miteinander verbinden;
mehrere Kühlkanäle (18), die sich durch die röhrenförmige Wandstruktur (13) zwischen dem inneren Mantel (15) und dem äußeren Mantel (16) erstrecken und durch entsprechende Paare benachbarter Rippen (17) definiert sind;
einen Wärmetauscher (20), der dazu konfiguriert ist, ein Wärmetauschfluid (QC) durch den inneren Mantel (15) zu zirkulieren, das Wärmetauschfluid (QC) von dem inneren Mantel (15) durch wenigstens einige der Rippen (17) zu dem äußeren Mantel (16) zu leiten und das Wärmetauschfluid (QC) durch den äußeren Mantel (16) zu zirkulieren;
wobei der Wärmetauscher (20) innere Wärmetauscherkanäle (22), die in dem inneren Mantel (15) verlaufen, äußere Wärmetauscherkanäle (23), die in dem äußeren Mantel (16) verlaufen, und Verbindungskanäle umfasst, die durch die jeweiligen Rippen (17) verlaufen und dazu konfiguriert sind, die jeweiligen inneren Wärmetauscherkanäle (22) und die jeweiligen äußeren Wärmetauscherkanäle (23) fluidisch zu koppeln;
**dadurch gekennzeichnet, dass** der Wärmetauscher (20) Einlasskanäle (25) aufweist, die entsprechende Einlassöffnungen (26) in einer Außenfläche (16a) des äußeren Mantels (16) aufweisen und entsprechende innere Wärmetauscherkanäle (22) durch entsprechende Rippen (17) erreichen, und dass die äußeren Wärmetauscherkanäle (23) durch Auslassöffnungen mit entsprechenden Kühlkanälen (18) fluidisch gekoppelt sind.

2. Heißgaspfadkomponente nach Anspruch 1, wobei der Wärmetauscher (20) Zwischenkanäle (30) umfasst, die in den jeweiligen Rippen (17) ausgebildet sind und mit den jeweiligen inneren Wärmetauscherkanälen (22) über die jeweiligen Verbindungskanäle verbunden sind und ferner mit den jeweiligen Kühlkanälen (18) über die jeweiligen Auslassöffnungen fluidisch gekoppelt sind.

3. Heißgaspfadkomponente nach einem der vorangehenden Ansprüche, wobei die äußeren Wärmetauscherkanäle (23) in dem äußeren Mantel (16) an den jeweiligen Rippen (17) oder zwischen den jeweiligen Paaren benachbarter Rippen (17) ausgebildet sind.

4. Heißgaspfadkomponente nach einem der vorangehenden Ansprüche, wobei die inneren Wärmetauscherkanäle (22) in dem inneren Mantel (15) an den jeweiligen Rippen (17) oder zwischen den jeweiligen Paaren benachbarter Rippen (17) ausgebildet sind.

5. Heißgaspfadkomponente nach einem der vorangehenden Ansprüche, wobei der Wärmetauscher (20) so viele innere Wärmetauscherkanäle (22) und äußere Wärmetauscherkanäle (23) umfasst wie Rippen (17).

6. Heißgaspfadkomponente nach einem der vorangehenden Ansprüche, wobei die inneren Wärmetauscherkanäle (22) und die äußeren Wärmetauscherkanäle (23) entlang eines Umfangs der rohrförmigen Wandstruktur (13) symmetrisch verteilt sind.

7. Heißgaspfadkomponente nach einem der vorangehenden Ansprüche, wobei Wärmetauscherkreisläufe (28) jeweils durch einen der inneren Wärmetauscherkanäle (22) und einen der äußeren Wärmetauscherkanäle (23) gebildet sind, die durch einen der Verbindungskanäle (25) miteinander gekoppelt sind, wobei mehrere Wärmetauscherkreisläufe (28) nacheinander an jeweils in Längsrichtung aufeinanderfolgenden Stellen der rohrförmigen Wandstruktur (13) angeordnet sind.

8. Heißgaspfadkomponente nach einem der vorangehenden Ansprüche, wobei jeder innere Wärmetauscherkanal (22) mit mehreren äußeren Wärmetauscherkanälen (23) fluidisch gekoppelt ist und/oder jeder äußere Wärmetauscherkanal (23) mit mehreren inneren Wärmetauscherkanälen (22) fluidisch gekoppelt ist.

9. Heißgaspfadkomponente nach einem der vorangehenden Ansprüche, wobei die inneren Wärmetauscherkanäle (22) und die äußeren Wärmetauscherkanäle (23) in einer Längsrichtung der rohrförmigen Wandstruktur (13) verlaufen.

10. Heißgaspfadkomponente nach einem der vorangehenden Ansprüche, wobei die Rippen (17) in Längsrichtung der rohrförmigen Wandstruktur (13) und transversal zum inneren Mantel (15) und zum äußeren Mantel (16) verlaufen.

11. Gasturbinenmaschine, die eine Heißgaspfadkomponente (10) nach einem der vorangehenden Ansprüche umfasst.

12. Gasturbinenmaschine nach Anspruch 11, die einen Verdichter und eine vom Verdichter gespeiste Luftkammer umfasst, wobei der äußere Mantel (16) der Heißgaskomponente fluidisch mit der Luftkammer gekoppelt ist und der Wärmetauscher (20) mit Luft aus der Luftkammer versorgt wird.

## Revendications

1. Composant d'un trajet de gaz chaud pour un moteur à turbine à gaz comprenant :
une structure de paroi tubulaire (13), comportant une coque intérieure (15) délimitant un trajet de gaz chaud (12), une coque extérieure (16) et plusieurs nervures (17), les nervures (17) reliant la coque intérieure (15) et la coque extérieure (16) l'une à l'autre ;
une pluralité de canaux de refroidissement (18) s'étendant à travers la structure de paroi tubulaire (13) entre la coque intérieure (15) et la coque extérieure (16) et définis par des paires respectives de nervures adjacentes (17) ;
un échangeur de chaleur (20) configuré pour faire circuler un fluide d'échange de chaleur (QC) à travers la coque intérieure (15), pour diriger le fluide d'échange de chaleur (QC) vers la coque extérieure (16) à partir de la coque intérieure (15) à travers au moins certaines des nervures (17) et pour faire circuler le fluide d'échange de chaleur (QC) à travers la coque extérieure (16) ;
dans lequel l'échangeur de chaleur (20) comprend des passages d'échange de chaleur internes (22) s'étendant dans la coque intérieure (15), des passages d'échange de chaleur extérieurs (23) s'étendant dans la coque extérieure (16) et des passages de connexion s'étendant à travers les nervures respectives (17) et configurés pour relier de manière fluide les passages d'échange de chaleur intérieurs respectifs (22) et les passages d'échange de chaleur extérieurs respectifs (23) ;
**caractérisé en ce que** l'échangeur de chaleur (20) comprend des passages d'entrée (25) ayant des ouvertures d'entrée respectives (26) dans une surface extérieure (16a) de la coque extérieure (16) et atteignant des passages d'échange de chaleur intérieurs respectifs (22) à travers des nervures respectives (17), et **en ce que** les passages d'échange de chaleur extérieurs (23) sont couplés de manière fluide à des canaux de refroidissement respectifs (18) à travers des ouvertures de sortie.

2. Composant de trajet de gaz chaud selon la revendication 1, dans lequel l'échangeur de chaleur (20) comprend des passages intermédiaires (30) formés dans les nervures respectives (17) et reliés aux passages d'échange de chaleur intérieurs respectifs (22) par l'intermédiaire de passages de connexion respectifs et couplés de manière fluide aux canaux de refroidissement respectifs (18) par l'intermédiaire d'ouvertures de sortie respectives.

3. Composant de trajet de gaz chaud selon l'une quelconque des revendications précédentes, dans lequel les passages d'échange thermique extérieurs (23) sont formés dans la coque extérieure (16) au niveau des nervures respectives (17) ou entre les paires respectives de nervures adjacentes (17).

4. Composant de trajet de gaz chaud selon l'une quelconque des revendications précédentes, dans lequel les passages intérieurs d'échange de chaleur (22) sont formés dans la coque intérieure (15) au niveau des nervures respectives (17) ou entre les paires respectives de nervures adjacentes (17).

5. Composant de trajet de gaz chaud selon l'une quelconque des revendications précédentes, dans lequel l'échangeur de chaleur (20) comprend autant de passages d'échange de chaleur intérieurs (22) et de passages d'échange de chaleur extérieurs (23) que de nervures (17).

6. Composant de trajet de gaz chaud selon l'une quelconque des revendications précédentes, dans lequel les passages d'échange thermique intérieurs (22) et extérieurs (23) sont répartis symétriquement le long d'un périmètre de la structure de paroi tubulaire (13).

7. Composant de circuit de gaz chaud selon l'une quelconque des revendications précédentes, dans lequel les circuits d'échange thermique (28) sont formés chacun par un passage d'échange thermique intérieur (22) et un passage d'échange thermique extérieur (23) mutuellement couplés par un passage de connexion (25) et une pluralité de circuits d'échange thermique (28) sont disposés successivement à des emplacements longitudinaux ultérieurs respectifs de la structure de paroi tubulaire (13).

8. Composant de trajet de gaz chaud selon l'une quelconque des revendications précédentes, dans lequel chaque passage d'échange thermique intérieur (22) est couplé de manière fluide à une pluralité de passages d'échange thermique extérieurs (23) et/ou chaque passage d'échange thermique extérieur (23) est couplé de manière fluide à une pluralité de passages d'échange thermique intérieurs (22).

9. Composant de trajet de gaz chaud selon l'une quelconque des revendications précédentes, dans lequel les passages d'échange thermique intérieurs (22) et extérieurs (23) s'étendent dans une direction longitudinale de la structure de paroi tubulaire (13).

10. Composant de trajet des gaz chauds selon l'une quelconque des revendications précédentes, dans lequel les nervures (17) s'étendent longitudinalement par rapport à la structure de paroi tubulaire (13) et transversalement à la coque intérieure (15) et à la coque extérieure (16).

11. Moteur à turbine à gaz comprenant un composant de trajet de gaz chaud (10) selon l'une quelconque des revendications précédentes.

12. Moteur à turbine à gaz selon la revendication 11, comprenant un compresseur et un plénum d'air alimenté par le compresseur, dans lequel la coque extérieure (16) du composant à gaz chaud est couplée de manière fluide au plénum et l'échangeur de chaleur (20) est alimenté en air par le plénum.
